# FASCICULE DE BREVET EUROPEEN

(11) **EP 0 184 490 B1**
(45) Date de publication et mention de la délivrance du brevet: **29.06.1994**
(21) Numéro de dépôt: 85402231.6
(22) Date de dépôt: 18.11.1985
(51) Int. Cl.: G02C 7/04, G02C 7/06

(54) **Lentille de contact asphérique multifocale**
Asphärische multifokale Kontaktlinse
Aspherical multifocal contact lens

(30) Priorité: 26.11.1984 FR 8417989
(43) Date de publication de la demande: 11.06.1986
(73) Titulaire: Vinzia, Francis Daniel, F-92350 Le Plessis Robinson (FR); MEDICONTACT S.A., CH-1202 GENEVE (CH)
(72) Inventeur: Vinzia, Francis Daniel, F-92350 Le Plessis Robinson (FR); Bonnet, Roger Jean Aristide, (FR)
(74) Mandataire: Sauvage, Renée

(56) Documents cités:
- FR-A- 1 217 892
- FR-A- 1 423 908
- FR-A- 2 314 512
- US-A- 4 418 991
- Contact Lenses ed. J. Stone & J. Philips, pp 636-637

## Description

L'invention concerne essentiellement une lentille de contact à au moins une face asphérique multifocale progressive, un procédé de préparation de cette lentille et son utilisation comme implant intra-oculaire pour remplacer le cristallin.

Le besoin se fait maintenant sentir de la réalisation de lentilles de contact permettant à la fois une bonne vision de loin et de près, pour des personnes ayant des difficultés pour accommoder, notamment les personnes presbytes.

De nombreuses solutions ont été proposées ces dernières années pour résoudre ce problème. La plupart d'entre elles sont basées sur la mise en place d'une correction vision de près, située à la périphérie de la lentille, différente de la correction vision de loin, par simple mouvement de la lentille au moment de l'abaissement des yeux, dans le passage de la vision de loin (regard horizontal) à la vision de près (voir FR-A-1 423 908 YSOPTIC).

Dans ce mouvement, la lentille, en s'appuyant sur le bord de la paupière inférieure, se déplace vers le haut dans l'abaissement du regard et met en place la correction de près devant la pupille.

Deux types de lentille ont été proposés, le premier type consistant en la réalisation d'une vision de près située à la périphérie de la lentille, dans un segment limité de la lentille, le reste de la lentille réalisant une correction vision de loin.

Le second type de lentille est conçu d'une manière générale pour réaliser une correction vision de près et la partie centrale est aplatie de manière à réaliser une correction vision de loin. Cette lentille est dite du type bifocal. Ainsi, la vision de près est corrigée sur la périphérie de la lentille, le centre réalisant une correction vision de loin.

Dans le cas où la lentille se déplace en s'appuyant sur le bord de la paupière inférieure, on n'obtient pas en pratique une bonne correction réalisée par cette dernière. En effet, dans la plupart du temps, du fait du grand nombre de paramètres à satisfaire, les deux corrections subsistent et le sujet voit double. Le problème ne peut être résolu dans ce sens que dans 1 à 2 % des cas. Ces paramètres sont par exemple le diamètre du segment, la position de ce dernier, le jeu de la paupière inférieure, le diamètre de la pupille, l'importance du déplacement de la lentille, etc.

Un bon fonctionnement de la lentille suppose la coexistence de deux conditions contradictoires, à savoir :
- un déplacement suffisamment ample de la lentille, et
- une bonne tolérance dans le port de cette dernière qui suppose une limitation de ses déplacements.

D'autre part, avec ces lentilles bifocales ou multi-focales, un problème supplémentaire réside dans le fait qu'à la limite de la partie de correction vision de près avec la partie de correction vision de loin, on obtient un raccord, dû aux différences de rayon de courbure pour obtenir le caractère bifocal ou multifocal. De tels raccords engendrent une zone provoquant un saut d'image. Dans le cas de lentilles multifocales, on obtient donc une multiplication des raccords, ce qui n'est pas acceptable.

Pour remédier à ces inconvénients, on a proposé d'autres solutions essayant d'introduire une courbure progressive sur la face externe ou interne de la lentille de façon à permettre le passage progressif de la vision de loin à la vision de près, soit par mouvement de la lentille, soit par réalisation d'une puissance progressive depuis le centre jusqu'au bord de celle-ci, à l'intérieur de la pupille (vision simultanée).

Une lentille de contact selon le préambule de la revendication 1 est connue par exemple du document US-A-4 418 991 qui décrit une lentille de contact dont la surface avant est sphérique, tandis que la surface arrière est asphérique. Cette dernière surface présente une zone centrale approximativement sphérique destinée à la correction de la vision de loin, laquelle zone est entourée d'une zone paracentrale asphérique pour la vision de près.

Cependant, de telles solutions sont encore insatisfaisantes en ce qui concerne la qualité de la correction, en particulier en ce qui concerne la valeur de la correction de près à atteindre, et en ce qui concerne la netteté de l'image corrigée.

La présente invention a donc pour but de fournir de nouvelles lentilles de contact ne présentant pas les inconvénients précités des lentilles de contact antérieures, avec une excellente correction de près ainsi qu'une netteté d'image améliorée.

La présente invention a également pour but de fournir une nouvelle lentille multifocale d'une conception particulièrement simple ainsi qu'un procédé de préparation d'une telle lentille d'une réalisation aisée, de manière à limiter le coût de fabrication de cette nouvelle lentille.

A cet effet, la présente invention a pour objet une lentille de contact multifocale à au moins une face asphérique, ladite face ayant une asphéricité et ainsi une puissance corrective variant continûment du centre de ladite face vers sa périphérie, cette lentille étant caractérisée en ce que ladite face asphérique a la forme d'une partie de surface de révolution présentant dans une coupe diamétrale deux courbes génératrices symétriques par rapport à l'axe de révolution, qui se joignent sur cet axe en formant un angle entre elles différent de 180°, la zone centrale autour de l'axe de révolution présentant en son centre une valeur d'asphéricité maximale qui décroît progressivement et radialement à partir dudit centre, rapidement à l'intérieur de la partie centrale, et lentement vers la périphérie de la lentille.

Suivant une réalisation, la partie centrale procure une zone pour la vision de près.

Suivant une caractéristique particulière, l'une des deux courbes génératrices de ladite face est choisie parmi le groupe consistant d'une courbe circulaire, d'une courbe parabolique, d'une courbe hyperbolique et d'une courbe elliptique.

Suivant une autre caractéristique, l'axe de révolution est confondu avec l'axe optique de ladite lentille.

Suivant une réalisation, le centre de chaque courbe génératrice de ladite face asphérique se trouve à une certaine distance de l'axe de révolution et est localisé du même côté de cet axe que la dite courbe, de sorte que le sommet de l'angle précité, formé par deux courbes génératrices, soit dirigé vers l'oeil, ladite face présentant alors une forme dite en "tore-citrouille".

Suivant une variante de réalisation, le centre de l'une des courbes génératrices de ladite face asphérique se trouve à une certaine distance de l'axe de révolution et est localisé du côté opposé à la courbe par rapport à cet axe, de sorte que le sommet de l'angle précité formé par deux courbes génératrices soit dirigé du côté opposé à l'oeil, ladite face présentant alors une forme dite en "tore-fuseau".

Suivant une autre caractéristique, sa face interne est en forme de "tore-citrouille" alors que sa face externe est en forme de "tore-fuseau", de sorte qu'il est procuré dans la partie centrale une correction pour la vision de près et dans la partie phériphérique une correction pour la vision de loin.

Avantageusement, la distance du centre de la courbe génératrice à l'axe de révolution est très faible, de préférence de l'ordre de 3 à 4 centièmes de millimètre.

La zone centrale de forte asphéricité précitée avoisine l'axe de révolution et présente une dimension sensiblement égale ou plus petite à celle de la pupille de l'oeil, de préférence de l'ordre de 1 à 5 à 2,5 millimètres.

Suivant une caractéristique particulière, il s'agit d'une lentille de contact choisie parmi le groupe consistant d'une lentille de contact souple, d'une lentille de contact rigide, d'une lentille de contact flexible et d'une lentille de contact combinée.

On notera qu'elle est réalisée par moulage dans un moule de forme correspondante.

L'invention a également pour objet un procédé de préparation d'une lentille de contact multifocale comportant les caractéristiques décrites précédemment prises seules ou en combinaison, par l'intermédiaire d'un tour comprenant une broche et un pivot, selon lequel la broche supporte un palet brut ou ébauche de lentille de contact et selon lequel l'axe du pivot se trouve en avant ou en arrière de la face à usiner du palet ou de l'ébauche, ce procédé étant caractérisé en ce qu'on réalise un décalage volontaire prédéterminé de l'axe du pivot par rapport à l'axe de la broche, et en ce qù'enfin on réalise l'usinage de la partie ou face externe ou interne, respectivement ou de préférence des deux.

Suivant une caractéristique particulière, le décalage des axes précités, pour réaliser l'usinage de la partie interne et pour réaliser l'usinage de la partie externe est identique.

Suivant une autre caractéristique, le décalage des axes, pour réaliser l'usinage de la partie interne et pour réaliser l'usinage de la partie externe est différent.

L'invention a également pour objet l'utilisation de la lentille asphérique multifocale comportant les caractéristiques décrites ci-dessus prises seules ou en combinaison, ou telle qu'obtenue par le procédé décrit ci-dessus, comme implant intra-oculaire pour remplacer le cristallin.

Avec une telle lentille selon l'invention, comportant au moins une face asphérique multifocale ayant une zone centrale constituant une zone optique centrale de forte aberration, on obtient une variation de puissance très rapide sur une très petite surface (définie par ladite zone centrale), et au-delà de cette zone centrale de forte aberration, la puissance est quasiment stable. De préférence, l'écart de dioptrie est de l'ordre de 0,25 dioptrie entre le voisinage de la zone centrale et le bord de la lentille.

Une telle lentille selon l'invention présente dans son ensemble une puissance variable du centre à la périphérie qui est soit positive soit négative, la plus forte variation de puissance étant réalisée vers le centre de la lentille ce qui est tout à fait favorable puisque l'oeil est plus sensible au centre qu'à la périphérie.

La qualité d'une telle lentille est excellente et on obtient une netteté d'image tout à fait remarquable. Ceci permet d'utiliser cette lentille non seulement comme lentille de contact mais encore comme implant intra-oculaire de remplacement de cristallin, ce qui constitue une application tout à fait inattendue.

### EXEMPLE 1.

### Lentille de contact avec face interne en forme de "tore-citrouille" et face externe en forme de "tore-fuseau".

On prend un palet brut classique à l'état sec du type pour lentille souple, par exemple réalisé en HEMA (polyhydroxyéthylméthacrylate) à 38,4% d'hydrophilie, présentant un indice de réfraction n à l'état sec égal à 1,51 et à l'état hydraté égal à 1,44 et ayant une expansion linéaire égale à 1,19.

Ce palet présente une forme de disque ayant de 5 à 6 millimètres d'épaisseur et un diamètre égal à 17 millimètres environ.

Pour usiner cette lentille, on utilise un tour à axe de pivot fixe.

On place le palet sur la broche ou poupée de ce tour de sorte que le centre du palet coïncide avec l'axe de la broche.

Pour usiner la face interne, on réalise ensuite un décalage relatif de l'axe de la broche et du pivot prédéterminé de sorte que l'axe du pivot fixe soit excentré en avant par rapport à l'axe de révolution de la lentille du côté de la face de travail du pivot (et donc par rapport à l'axe de la broche qui coïncide avec l'axe de révolution de la lentille) d'une distance de l'ordre de 4 centièmes de millimètre, de manière que la fin de course du pivot soit dans le vide.

On réalise ensuite l'usinage de la partie interne concave de la lentille par passes successives, de manière connue en soi.

On réalise en outre également un polissage de la surface usinée à l'aide d'un polissoir souple élastique qui se forme sur la surface à polir du palet, ce polissoir étant du type caoutchouc recouvert d'un tissu à polir classique comme par exemple une peau de chamois.

Selon un mode de réalisation actuellement préféré, on réalise de préférence également la face externe convexe avec le même décalage relatif des axes de pivot et de broche, en obtenant ainsi une face externe en tore fuseau.

Avec un rayon de base interne à sec égal à 6,72 millimètres et un rayon de base externe à sec égal à 8,43 millimètres, on obtient avec le décalage précité des axes de l'ordre de 4 centièmes de millimètre, une zone optique centrale de lentille de forte aberration et une zone optique périphérique de forme générale asphérique ayant une aberration négligeable de sorte que la puissance de correction de la lentille constitue, pour cette zone optique centrale, une correction vue de près de l'ordre de moins 8 dioptries et pour la zone optique périphérique de la lentille, pour la correction vue de loin, de moins 15,15 dioptries.

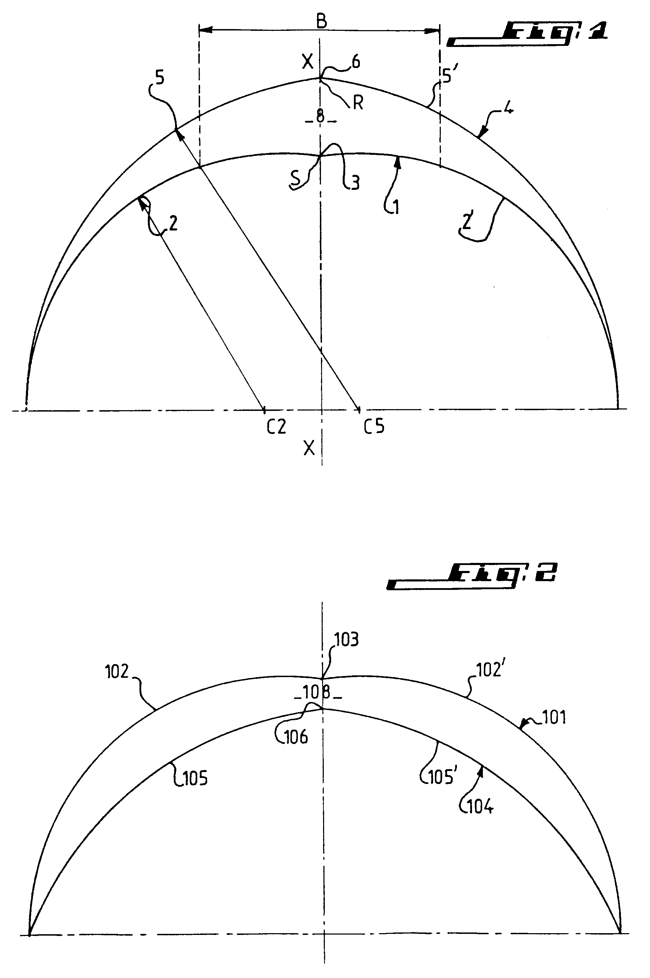

Cette lentille est représentée schématiquement à la figure 1 annexée de manière très agrandie.

On peut voir que la face interne 1 concave présente une forme en tore citrouille comprenant une zone optique périphérique 2 ou 2' ayant en demi-coupe axiale une forme légèrementasphérique et une zone optique centrale 3 de forte asphéricité définie par la rencontre des courbes 2, 2' génératrices de ladite face. Egalement, la face externe 4 convexe présente une zone optique périphérique 5, 5' ayant en demi-coupe axiale une forme légèrement asphérique et une zone optique centrale 6 de forte asphéricité définie par la rencontre des courbes 5, 5' génératrices de ladite face externe.

Au total, cette lentille présente donc bien une forme générale en tore ou analogue avec une zone optique centrale de chaque face de forte asphéricité, et donc de forte aberration.

Puisque la face interne est en tore citrouille, cette lentille s'adaptera davantage à la forme de l'oeil.

Dans les conditions de cet exemple, l'écart de puissance est de l'ordre de 7 dioptries pour cette lentille.

A l'état hydraté, cette lentille présentera une puissance de correction vue de près de moins 6 dioptries au centre, une puissance de correction vue de loin à la périphérie de moins 11 dioptries soit ici un écard de 5 dioptries, dans les conditions d'utilisation pratiques.

Cette lentille est utilisée comme lentille de contact.

Naturellement, cette lentille peut être réalisée sous forme d'une lentille de contact rigide ou flexible ou combinée.

D'autre part, le décalage des axes peut être différent sur la face externe relativement à la face interne, ce qui permet de faire varier à volonté la puissance de correction d'une telle lentille.

### EXEMPLE 2.

### Lentille de contact avec face interne en tore fuseau et face externe en tore citrouille.

On procède de la même manière qu'à l'exemple 1 sauf que dans ce cas l'axe du pivot fixe est excentré en arrière par rapport à l'axe de révolution de la lentille du côté de la face de travail du pivot, d'une distance également de l'ordre de 4 centièmes de millimètre.

Dans ce cas, on obtient une zone optique centrale de forte aberration de plus faible puissance en signe par rapport à la périphérie de la lentille.

Dans le cas présent, la puissance de la zone optique centrale de forte aberration de correction vue de loin est de moins 15,15 dioptries, la puissance de correction à la périphérie vue de près est de moins 8 dioptries, c'est-à-dire qu'on obtient une puissance de correction négative décroissante du centre à la périphérie.

Cette lentille est représentée à la figure 2. Les parties analogues à celles de la lentille représentées à la figure 1 portent les mêmes numéros de référence qu'à la figure 1, augmentés de 100.

On peut constater de ce qui précède que pour chaque forme qui est réalisée avec le décalage des axes précités, la lentille est définie par des surfaces toriques.

### EXEMPLE 3.

### Lentille formant implant intra-oculaire pour remplacer le cristallin.

Dans ce cas, on prend un palet dur en polyméthylméthacrylate par exemple non hydrophile, à indice de réfraction égal à 1,490 dont on usine la face externe convexe soit en forme de tore citrouille soit en forme de tore fuseau. De préférence, la face externe convexe est usinée en forme de tore fuseau, comme réalisé à l'exemple 1 pour la face externe 5.

La face interne est la face interne classique d'un im-plant intra-oculaire de remplacement du cristallin, c'est-à-dire que cette face interne peut être soit plane et dans ce cas aucun usinage n'est nécessaire, soit concave ou convexe, avec un usinage de cette face interne réalisé de manière habituelle.

Naturellement, l'invention n'est nullement limitée aux moyens décrits et comprend tous les moyens constituant des équivalents techniques des moyens décrits ainsi que leurs diverses combinaisons. En particulier, on peut réaliser de telles lentilles également par moulage dans des moules ayant des formes correspondantes.

D'autre part, on peut réaliser seulement une face ou les deux faces de la lentille avec une zone optique centrale de forte aberration prédéterminée comme précédemment décrit, en prévoyant une forte asphéricité prédéterminée.

On peut remplacer le pivot par une table de travail X, Y dont le déplacement est automatisé, par exemple en étant commandé par un ordinateur, microprocesseur, etc. Le terme pivot inclut une telle table de travail ou analogue.

Selon l'invention il est clair que seulement un déplacement relatif entre l'axe du pivot et l'axe de la poupée du tour d'au moins deux ou trois centièmes de millimètres provoquera une forte asphéricité/aberration de la zone optique centrale avec une faible asphéricité/aberration de la zone optique périphérique, résultant en une différence suffisante de correction entre les zones optiques centrale et périphérique pour fournir une correction de la vision de près et de la vision de loin dans la même lentille, sans zone intermédiaire.

## Revendications

1. Lentille de contact multifocale à au moins une face asphérique, ladite face ayant une asphéricité et ainsi une puissance corrective variant continûment du centre (3) de ladite face (1) vers sa périphérie, caractérisée en ce que ladite face asphérique (1) a la forme d'une partie de surface de révolution présentant dans une coupe diamétrale deux courbes génératrices symétriques (2, 2') par rapport à l'axe de révolution, (X-X) qui se joignent sur cet axe en formant un angle entre-elles différent de 180°, la zone centrale autour de l'axe de révolution présentant en son centre (3) une valeur d'asphéricité maximale qui décroit progressivement et radialement à partir dudit centre (3), rapidement à l'intérieur de la partie centrale (B), et lentement vers la périphérie de la lentille.

2. Lentille de contact multifocale selon la revendication 1, caractérisée en ce que la partie centrale (B) procure une zone pour la vision de près.

3. Lentille selon la revendication 1 ou 2, caractérisée en ce que l'une des deux courbes (2, 2') génératrices de ladite face (1) est choisie parmi le groupe consistant d'une courbe circulaire, d'une courbe parabolique, d'une courbe hyperbolique et d'une courbe elliptique.

4. Lentille selon l'une quelconque des revendications précédentes, caractérisée en ce que l'axe de révolution (X-X) est confondu avec l'axe optique de ladite lentille.

5. Lentille selon l'une quelconque des revendications précédentes, caractérisée en ce que le centre (C 2) de chaque courbe génératrice (2) de ladite face asphérique (1) se trouve à une certaine distance de l'axe de révolution (X-X) et est localisé du même côté de cet axe (X-X) que ladite courbe (2), de sorte que le sommet (S) de l'angle précité, formé par deux courbes génératrices (2, 2'), soit dirigé vers l'oeil, ladite face (1) présentant alors une forme dite en "tore-citrouille".

6. Lentille selon l'une quelconque des revendications précédentes, caractérisée en ce que le centre (C5) de l'une des courbes génératrices (5, 5') de ladite face asphérique (4) se trouve à une certaine distance de l'axe de révolution (X-X) et est localisé du côté opposé à la courbe (5, 5') par rapport à cet axe (X-X), de sorte que le sommet (R) de l'angle précité formé par deux courbes génératrices (5, 5') soit dirigé du côté opposé à l'oeil, ladite face (1) présentant alors une forme dite en "tore-fuseau".

7. Lentille selon l'une quelconque des revendications précédentes, caractérisée en ce que sa face interne (1) est en forme de "tore-citrouille" alors que sa face externe (4) est en forme de "tore-fuseau", de sorte qu'il est procuré dans la partie centrale (B) une correction pour la vision de près et dans la partie périphérique une correction pour la vision de loin.

8. Lentille selon l'une quelconque des revendications 5 à 7, caractérisée en ce que la distance du centre de la courbe génératrice à l'axe de révolution est très faible, de préférence de l'ordre de 3 à 4 centièmes de millimètre.

9. Lentille selon l'une quelconque des revendications précédentes, caractérisée en ce que la zone centrale de forte asphéricité précitée avoisine l'axe de révolution et présente une dimension sensiblement égale ou plus petite à celle de la pupille de l'oeil, de préférence de l'ordre de 1,5 à 2,5 mm.

10. Lentille selon l'une quelconque des revendications précédentes, caractérisée en ce qu'il s'agit d'une lentille de contact choisie parmi le groupe consistant d'une lentille de contact souple, d'une lentille de contact rigide, d'une lentille de contact flexible et d'une lentille de contact combinée.

11. Lentille selon l'une quelconque des revendications précédentes, caractérisée en ce qu'elle est réalisée par moulage dans un moule de forme correspondante.

12. Procédé de préparation d'une lentille de contact multifocale selon l'une quelconque des revendications précédentes, par l'intermédiaire d'un tour comprenant une broche et un pivot, selon lequel la broche supporte un palet brut ou ébauche de lentille de contact et selon lequel l'axe du pivot se trouve en avant ou en arrière de la face à usiner du palet ou de l'ébauche, caractérisé en ce qu'on réalise un décalage volontaire prédéterminé de l'axe du pivot par rapport à l'axe de la broche ; et en ce qu'enfin on réalise l'usinage de la partie ou face externe ou interne, respectivement ou de préférence des deux.

13. Procédé selon la revendication 12, caractérisé en ce que le décalage des axes précités, pour réaliser l'usinage de la partie interne et pour réaliser l'usinage de la partie externe est identique.

14. Procédé selon la revendication 12, caractérisé en ce que le décalage des axes, pour réaliser l'usinage de la partie interne et pour réaliser l'usinage de la partie externe, est différent.

15. Utilisation de la lentille asphérique multifocale telle que définie selon l'une quelconque des revendications 1 à 11, ou telle qu'obtenue par le procédé selon l'une quelconque des revendications 12 à 14 comme implant intra-oculaire pour remplacer le cristallin.

## Claims

1. Multifocal contact lens with at least one aspherical face, the said face having an asphericity and thus a corrective power varying continuously from the center (3) of the said face (1) towards its periphery, characterized in that the said aspherical face (1) has the shape of one portion of a surface of revolution exhibiting in a diametral section two generating lines (2, 2') symmetrical with respect to the axis of revolution (X-X) which are meeting on this axis while forming an angle different from 180° therebetween, the central zone about the axis of revolution exhibiting at its center (3) a maximum asphericity value which decreases gradually and radially from the said center (3) quickly inside of the central portion (B) and slowly towards the periphery of the lens.

2. Multifocal contact lens according to claim 1, characterized in that the central portion (B) provides a zone for the near vision.

3. Lens according to claim 1 or 2, characterized in that one of the two curves (2, 2') generating the said face (1) is selected from the group consisting of a circular curve, of a parabolic curve, of a hyperbolic curve and of an elliptic curve.

4. Lens according to any one of the foregoing claims, characterized in that the axis of revolution (X-X) is coinciding with the optical axis of the said lens.

5. Lens according to any one of the foregoing claims, characterized in that the center (C2) of each curve (2) generating the said aspherical face (1) is lying at a certain distance from the axis of revolution (X-X) and is located on the same side of this axis (X-X) as the said curve (2) so that the vertex (S) of the aforesaid angle formed of two generating lines (2,2') be directed towards the eye, the said face (1) then exhibiting a so-called "torus-pumpkin" shape.

6. Lens according to any one of the foregoing claims, characterized in that the center (C5) of one of the curves (5, 5') of the said aspherical face (4) is lying at a certain distance from the axis of revolution (X-X) and is located on the side opposite to the curve (5, 5') with respect to this axis (X-X) so that the vertex (R) of the aforesaid angle formed of two generating curves (5, 5') be directed towards the side opposite to the eye, the said face (1) then exhibiting a so-called "torus-spindle" shape.

7. Lens according to any one of the foregoing claims, characterized in that its internal face (1) has a "torus-pumpkin" shape whereas its external face (4) has a "torus-spindle" shape so that there is provided in central part (B) a correction for the near vision and in the peripheral part a correction for the remote vision.

8. Lens according to any one of claims 5 to 7, characterized in that the distance of the center of the generating curve to the axis of revolution is very small, preferably of the order of 3 to 4 hundredths of millimeter.

9. Lens according to any one of the foregoing claims, characterized in that the aforesaid central zone of great asphericity is near the axis of revolution and exhibits a dimension substantially equal to or smaller than that of the pupil of the eye, preferably of the order of 1.5 to 2.5 mm.

10. Lens according to any one of the foregoing claims, characterized in that it is a contact lens selected from the group consisting of a yielding contact lens, of a rigid contact lens, of a flexible contact lens and of a combined contact lens.

11. Lens according to any one of the foregoing claims, characterized in that it is made by molding in a mold of corresponding shape.

12. Method of preparation of a multifocal contact lens according to any one of the foregoing claims, through the medium of a lathe comprising a spindle and a catch pin, according to which the spindel is supporting a raw puck or a blank of contact lens and according to which the axis of the catch pin is lying forward or rearward of the face to be machined of the puck or of the blank, characterized in that one provides a voluntary predetermined offset of the axis of the catch pin with respect to the axis of the spindle ; and in that at last one performs the machining of the external or internal portion or face, respectively, or of both preferably.

13. Method according to claim 12, characterized in that the offset of the aforesaid axes to perform the machining of the internal portion and to perform the machining of the external portion is identical.

14. Method according to claim 12, characterized in that the offset of the axes to perform the machining of the internal portion and to perform the machining of the external portion is different.

15. Utilization of the multifocal aspherical lens such as defined according to any one of claims 1 to 11 or such as obtained by the method according to any one of claims 12 to 14 as an intraocular implant for replacing qthe crystalline lens.

## Patentansprüche

1. Multifokale Kontaklinse mit wenigstens einer asphärichen Fläche, wobei die besagte Fläche eine kontinuierlich vom Mittelpunkt (3) der besagten Fläche (1) zu ihrem Umfang hin veränderliche Asphärizität und somit eine korrigierende Brechkraft hat, dadurch gekennzeichnet, dass die besagte asphäriche Fläche (1) die Gestalt eines Teils einer Rotationsfläche hat, die im Durchmesserschnitt zwei in Bezug auf die Rotationsachse (X-X) symmetrische erzeugende Kurven (2,2') aufweist, die auf dieser Achse zusammenlaufen indem sie zwischen sich einen sich von 180° unterscheidenden Winkel bilden, wobei der Mittelbereich um die Rotationsachse herum an seinem Mittelpunkt (3) einen maximalen Asphärizitätswert aufweist, der allmählich und radial von dem besagten Mittelpunkt (3) ab, schnell innerhalb des Mittelteiles (B) und langsam zum Umfang der Linse hin abnimmt.

2. Multifokale Kontaktlinse nach Anspruch 1, dadurch gekennzeichnet, dass der Mittelteil (B) einen Bereich für das Nahsehen verschafft.

3. Linse nach Anspruch 1 oder 2, dadurch gekennzeichnet, dass eine der beiden die besagte Fläche (1) erzeugenden Kurven (2,2') aus derjenigen Gruppe gewählt wird, die aus einer kreisförmigen Kurve, aus einer parabelförmigen Kurve, aus einer hyperbolischen Kurve und aus einer elliptischen Kurve besteht.

4. Linse nach irgendeinem der vorangehenden Ansprüche, dadurch gekennzeichnet, dass die Rotationsachse (X-X) mit der optischen Achse der besagten Linse zusammenfällt.

5. Linse nach irgendeinem der vorangehenden Ansprüche, dadurch gekennzeichnet, dass der Mittelpunkt (C2) jeder die besagte asphärische Fläche (1) erzeugenden Kurve (2) sich in einer gewissen Entfernung von der Rotationsachse (X-X) befindet und auf derselben Seite dieser Achse (X-X) als die besagte Kurve (2) gelegen ist, so dass die Spitze (S) des durch zwei erzeugende Kurven (2,2') gebildeten vorgenannten Winkels zum dem Auge hin gerichtet ist, wobei die besagte Fläche (1) dann eine sogenannte "Torus-Kürbis"-förmige Gestalt aufweist.

6. Linse nach irgendeinem der vorangehenden Ansprüche, dadurch gekennzeichnet, dass der Mittelpunkt (C5) von einer der die besagte asphärische Fläche (4) erzeugenden Kurven (5,5') sich in einer gewissen Entfernung von der Rotationsachse (X-X) befindet und auf der gegenüber dieser Achse (X-X) der Kurve (5,5') entgegengesetzten Seite gelegen ist, so dass die Spitze (R) des durch zwei erzeugenden Kurven (5,5') gebildeten vorgenannten Winkels zu der dem Auge entgegengesetzten Seite hin gerichtet ist, wobei die besagte Fläche (1) dann eine sogenannte "Torus-Spindel"-förmige Gestalt aufweist.

7. Linse nach irgendeinem der vorangehenden Ansprüche, dadurch gekennzeichnet, dass ihre Innenfläche (1) "Torus-Kürbis"-förmig ist, während ihre Aussenfläche (4) "Torus-Spindel"-förmig ist, so dass in dem Mittelteil (B) eine Korrektur für das Nahsehen und in dem Umfangsteil eine Korrektur für das Fernsehen geschaffen wird.

8. Linse nach irgendeinem der Ansprüche 5 bis 7, dadurch gekennzeichnet, dass die Entfernung des Mittelpunktes der erzeugenden Kurve von der Rotationsachse sehr schwach ist, vorzugsweise der Grössenordnung von 3 bis 4 Hundertsteln von Millimeter.

9. Linse nach irgendeinem der vorangehenden Ansprüche, dadurch gekennzeichnet, dass der Mittelbereich mit vorgenannter starker Aspherizität die Rotationsachse angrenzt und eine etwa gleiche oder kleinere Abmessung wie oder als diejenige der Pupille des Auges, vorzugsweise der grossen Ordnung von 1,5 bis 2,5 mm aufweist.

10. Linse nach irgendeinem der vorangehenden Ansprüche, dadurch gekennzeichnet, dass es sich um eine Kontaktlinse handelt, die aus derjenigen Gruppe gewählt wird, die aus einer nachgiebigen Kontaktlinse, aus einer steifen Kontaktlinse, aus einer biegsamen Kontaktlinse und aus einer Verbundkontaktlinse besteht.

11. Linse nach irgendeinem der vorangehenden Ansprüche, dadurch gekennzeichnet, dass sie durch Formguss in einer Giessform entsprechender Gestalt hergestellt wird.

12. Verfahren zur Vorbereitung einer multifokalen Kontaktlinse gemäss irgendeinem der vorangehenden Ansprüche, über eine eine Spindel und einen Drehzapfen aufweisende Drehbank, gemäss welchem die Spindel eine rohe Scheibe bzw. einen Vorformling der Kontaktlinse aufweist und gemäss welchem die Drehzapfenachse sich vor oder hinter der zu bearbeitenden Fläche der Scheibe bzw. des Vorformlings liegt, dadurch gekennzeichnet, dass man eine freiwillige vorbestimmte Versetzung der Drehzapfenachse gegenüber der Spindelachse durchführt und dass man schliesslich die Bearbeitung jeweils des bzw. der äusseren oder inneren Teiles bzw. Fläche oder vorzugsweise der beiden durchführt.

13. Verfahren nach Anspruch 12, dadurch gekennzeichnet, dass die Versetzung der vorgenannten Achsen, um die Bearbeitung des inneren Teiles durchzuführen und um die Bearbeitung des äusseren Teiles durchzuführen, identisch ist.

14. Verfahren nach Anspruch 12, dadurch gekennzeichnet, dass die Versetzung der Achsen, um die Bearbeitung des inneren Teiles durchzführen und um die Bearbeitung des äusseren Teiles durchzuführen, unterschiedlich ist.

15. Verwendung der multifokalen asphärischen Linse, wie nach irgendeinem der Ansprüche 1 bis 11 bestimmt oder wie mit dem Verfahren gemäss irgendeinem der Ansprüche 12 bis 14 erzielt, als intraokulären Implantat, um die Augenlinse zu ersetzen.
